# EUROPÄISCHE PATENTSCHRIFT

(11) **EP 2 659 152 B1**
(45) Veröffentlichungstag und Bekanntmachung des Hinweises auf die Patenterteilung: **13.07.2016**
(21) Anmeldenummer: 11785686.4
(22) Anmeldetag: 23.11.2011
(51) Int. Cl.: F16C 17/02, F16C 27/02, F16C 27/06, F16C 33/20, H02K 7/08

(54) **ANTRIEBSEINHEIT MIT LAGEREINRICHTUNG UND VERSTELLANTRIEB**
DRIVE UNIT WITH BEARING DEVICE AND ADJUSTMENT DRIVE
UNITÉ D'ENTRAÎNEMENT AVEC DISPOSITIF DE PALIER ET ENTRAÎNEMENT DE RÉGLAGE

(30) Priorität: 29.12.2010 DE 102010064295
(43) Veröffentlichungstag der Anmeldung: 06.11.2013
(73) Patentinhaber: Robert Bosch GmbH, 70442 Stuttgart (DE)
(72) Erfinder: MILI, Tarek, 67630 Lauterbourg (DE); BAUR, Sandra, 77855 Achern (DE); HUESGES, Mario, 77830 Buehlertal (DE); LAUK, Detlef, 77871 Renchen (DE)
(86) Internationale Anmeldenummer: PCT/EP2011/070727
(87) Internationale Veröffentlichungsnummer: WO 2012/089418

(56) Entgegenhaltungen:
- EP-A1- 0 563 583
- DE-U1- 9 318 754
- US-A- 3 942 848
- US-A- 4 885 948
- US-A- 5 089 736

## Beschreibung

### Stand der Technik

Die Erfindung betrifft eine Antriebseinheit nach dem Oberbegriff des Anspruchs 1. Ferner betrifft die Erfindung einen Verstellantrieb mit einer erfindungsgemäßen Antriebseinheit.

Eine derartige Antriebseinheit bzw. ein derartiger Verstellantrieb sind aus der EP 0 563 583 A1 bekannt. Dabei ist das dritte Lager, das aus Kunststoff besteht, in einer Aufnahme eines Getriebegehäuses angeordnet. Das dritte Lager besteht aus einem einstückigen Körper, der in einer Sacklochbohrung des dritten Lagers einen Endabschnitt der Ankerwelle aufnimmt, und dessen Außenumfang von einer Feder umfasst ist, die sich axial in der Aufnahme für das dritte Lager in dem Getriebegehäuse abstützt. Das dritte Lager ist sowohl in axialer, als auch in radialer Richtung beweglich gelagert. Das dritte Lager benötigt jedoch zur angesprochenen flexiblen Anordnung in der Aufnahme des Getriebegehäuses die Feder als zusätzliches Bauelement, so dass ein relativ hoher Herstellungssowie Montageaufwand erforderlich ist.

Aus dem US 5,089,736 ist eine Lagereinrichtung bekannt, bei der das dritte Lager zur Lagerung des Endabschnitts der Ankerwelle ebenfalls eine Aufnahmeöffnung für den Endabschnitt in Form einer Sacklochbohrung aufweist, und wobei das dritte Lager in einer als Durchgangsbohrung ausgebildeten Aufnahmeöffnung in dem Getriebegehäuse angeordnet ist. Die axiale Fixierung des dritten Lagers in dem Getriebegehäuse erfolgt mittels eines zusätzlichen Elements. Weiterhin weist der Lagerkörper einen in einer Ringnut angeordneten Dichtring auf, der eine axiale Beweglichkeit des dritten Lagers in der Aufnahmeöffnung ermöglicht. Somit benötigt auch das aus der genannten Schrift bekannte Lager wenigstens ein zusätzliches Element, um in der Aufnahmeöffnung an dem vorgesehenen Ort angeordnet werden zu können.

Aus dem US 4,885,948 ist darüber hinaus ein Lager für einen Zwischenbereich der Ankerwelle bekannt, das einen aus Kunststoff bestehenden Formkörper umfasst, der mit sich in axialer Richtung erstreckenden Haltearmen die Ankerwelle an ihrem Außenumfang bereichsweise umgreift. Die Ankerwelle ist somit lediglich in Teilbereichen ihres Umfangs von dem Lager umgriffen.

### Offenbarung der Erfindung

Ausgehend von dem dargestellten Stand der Technik liegt der Erfindung die Aufgabe zugrunde, eine Antriebseinheit nach dem Oberbegriff des Anspruchs 1 derart weiterzubilden, dass eine möglichst kostengünstige Herstellbarkeit der Antriebseinheit bei gleichzeitig minimierter Teileanzahl und einfacher Montage ermöglicht wird. Diese Aufgabe wird erfindungsgemäß bei einer Antriebseinheit mit den Merkmalen des Anspruchs 1 gelöst. Um die unterschiedlichen Anforderungen, die an ein derartiges drittes Lager gestellt werden, jeweils optimal erfüllen zu können, ist es erfindungsgemäß vorgesehen, dass das dritte Lager drei unterschiedliche Funktionsbereiche aufweist, einen ersten Funktionsbereich zur Aufnahme der Antriebswelle an ihrem Endbereich, einen zweiten Funktionsbereich zur Aufnahme des dritten Lagers in der Aufnahme (Gehäuse) und einen dritten Funktionsbereich, der den ersten Funktionsbereich mit dem zweiten Funktionsbereich verbindet, wobei der dritte Funktionsbereich elastisch ausgebildet ist und eine Relativbewegung zwischen dem ersten und dem zweiten Funktionsbereich erlaubt. Darüber hinaus sind der erste Funktionsbereich und der zweite Funktionsbereich jeweils hülsenförmig ausgebildet ist, und der Außendurchmesser des zweiten Funktionsbereichs weist einen Durchmesser auf, der der Aufnahme im Gehäuseelement angepasst ist, so dass der zweite Funktionsbereich form- bzw. kraftschlüssig in der Aufnahme aufgenommen ist.

Vorteilhafte Weiterbildungen der erfindungsgemäßen Antriebseinheit sind in den Unteransprüchen angeführt.

Um bei geringen Belastungen der Antriebseinheit, insbesondere der Antriebswelle, sowohl einen optimalen Wirkungsgrad der Lagereinrichtung als auch einen besonders geringen Verschleiß an dem dritten Lager zu ermöglichen, ist es darüber hinaus bevorzugt vorgesehen, dass das dritte Lager die Antriebswelle an ihrem Endbereich aufnimmt, vorzugsweise mit geringem radialen Spiel. Das bedeutet, dass bei den angesprochenen geringen Belastungen der Antriebseinheit, die sich in nur geringsten radialen Auslenkungen des Endbereichs der Antriebswelle widerspiegeln, der Endbereich der Antriebswelle gegebenenfalls nicht in Kontakt mit dem dritten Lager gerät.

In einer konstruktiven Ausgestaltung der drei Funktionsbereiche wird vorgeschlagen, dass die drei Funktionsbereiche in Bezug auf eine Längsachse des dritten Lagers im Wesentlichen axial hintereinander angeordnet sind.

Dadurch wird eine besonders hinsichtlich ihres Durchmessers bauraumoptimierte Lagereinrichtung bzw. ein bauraumoptimiertes drittes Lager ermöglicht.

In einer alternativen Ausgestaltung der Erfindung, die hinsichtlich der axialen Baulänge des dritten Lagers besonders vorteilhaft ist, wird vorgeschlagen, dass die drei Funktionsbereiche in Bezug auf eine Längsachse des dritten Lagers im Wesentlichen radial bzw. konzentrisch zueinander angeordnet sind.

Zur einfachen Beeinflussung der Elastizität des dritten Funktionsbereichs ist es möglich, dass der dritte Funktionsbereich Verbindungsstege aufweist, die den ersten Funktionsbereich mit dem zweiten Funktionsbereich verbinden. In der Praxis bedeutet dies, dass die elastischen Eigenschaften über die Anzahl der Stege, deren Querschnitt sowie deren Länge beinflussbar ist.

Besonders gute Dämpfungseigenschaften des dritten Lagers, die darüber hinaus eine besonders gute Geräuschisolierung bzw. das Abkoppeln von in die Antriebswelle eingebrachten Schwingungen sowie eine zusätzliche radiale Abstützung der Lagereinrichtung ermöglicht, werden erzielt, wenn der zweite Funktionsbereich von einem Dämpfungselement radial umfasst ist, das in dem ortsfesten Element anliegt.

Hierbei kann es zur besonders einfachen und sicheren Montage des Dämpfungselements vorgesehen sein, dass das Dämpfungselement als ein insbesondere aus Gummi bestehender O-Ring ausgebildet ist, der in einer radial umlaufenden Aufnahme des zweiten Funktionsbereichs formschlüssig aufgenommen ist.

Die Erfindung umfasst auch einen Verstellantrieb, insbesondere Fensterverstellantrieb oder Sitzverstellungsantrieb in einem Kraftfahrzeug, mit einer erfindungsgemäßen Antriebseinheit. Ein derartiger Verstellantrieb weist bei relativ kostengünstiger Fertigung einen geräuscharmen Betrieb, hohen Wirkungsgrad, die Möglichkeit der Übertragung relativ hoher Blockiermomente sowie einen relativ geringen Verschleiß auf.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine schematische Darstellung einer erfindungsgemäßen Antriebseinheit in einer teilweise geschnittenen Seitenansicht,
- Fig. 2: ein erstes Ausführungsbeispiel eines erfindungsgemäßen Lagers zur Aufnahme eines Endabschnitts einer Antriebswelle in einer perspektivischen Ansicht,
- Fig. 3: das Lager gemäß der Fig. 2 in einer Seitenansicht,
- Fig. 4: das Lager gemäß der Fig. 3 in einem Längsschnitt,
- Fig. 5: ein gegenüber den Fig. 2 bis Fig. 4 abgewandeltes Lager mit einem Dämpfungselement in Seitenansicht,
- Fig. 6: ein gegenüber der Fig. 5 nochmals modifiziertes Lager in einer perspektivischen Ansicht und
- Fig. 7 und Fig. 8: ein weiteres Ausführungsbeispiel mit einem gegenüber den Fig. 2 bis Fig. 4 modifizierten Lager in perspektivischer Ansicht bzw. in Draufsicht.

Gleiche Bauteile bzw. Bauteile mit gleicher Funktion sind in den Figuren mit den gleichen Bezugsziffern versehen.

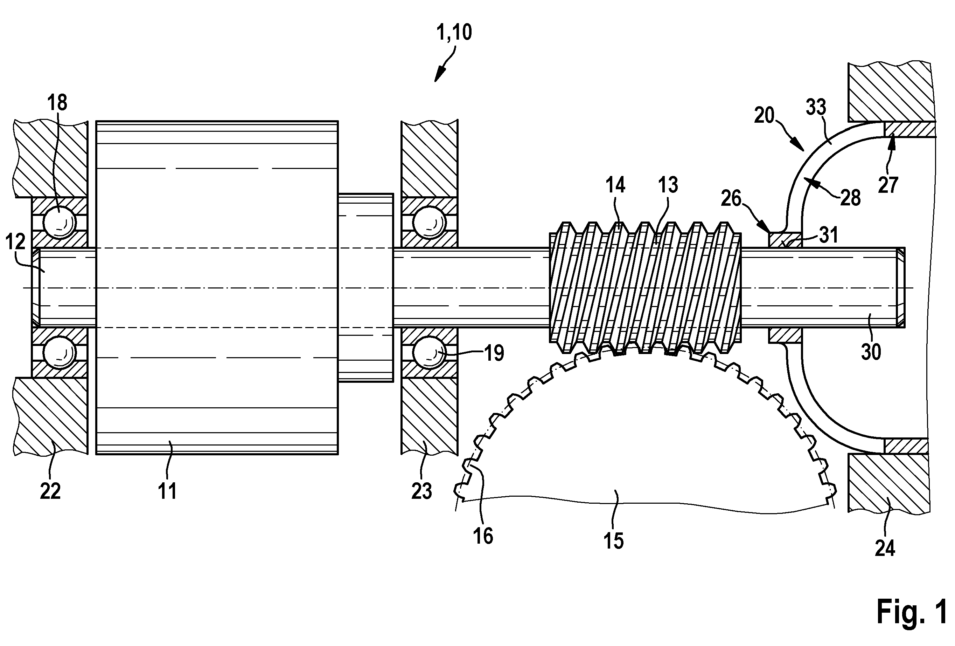

In der Fig. 1 ist stark vereinfacht eine Lagereinrichtung 10 für eine Antriebseinheit 1 dargestellt. Die Antriebseinheit 1 dient bevorzugt dem Betrieb eines Verstellantriebes, insbesondere eines Komfortantriebes, z.B. einem Fensterheberantrieb oder einem Sitzverstellungsantrieb, oder aber eines Front- oder Heckwischerantriebes oder aber einem sonstigen Getriebemotor in einem Kraftfahrzeug.

Die Antriebseinheit 1 weist insbesondere einen als Elektromotor ausgebildeten Antriebsmotor 11 auf, der über eine Antriebswelle 12 in der Fig. 1 ein als separates Antriebsritzel 13 oder als integralen Bestandteil der Antriebswelle 12 ausgebildetes Bauteil antreibt. Hierzu ist das Antriebsritzel 13 insbesondere in der Antriebswelle 12 aufgepresst und weist an seinem Außenumfang eine Außenverzahnung 14 auf. Die Außenverzahnung 14 bzw. das Antriebsritzel 13 ist in Wirkverbindung mit einem als Abtriebselement ausgebildeten Getriebeelement, insbesondere einem Schneckenrad 15, angeordnet, das an seinem Außenumfang eine Außenverzahnung 16 aufweist, die mit der Außenverzahnung 14 des Antriebsritzels 13 kämmt. Weiterhin ist die gesamte Antriebseinheit 1 in einem nicht näher dargestellten Gehäuse aufgenommen, welches die Antriebseinheit 1 bzw. die Lagereinrichtung 10 umschließt.

Die Lagereinrichtung 10 weist drei Lager 18 bis 20 auf, die der Lagerung der Antriebswelle 12 dienen. Hierbei ist das erste Lager 18 auf der dem Antriebsritzel 13 abgewandten Seite des Antriebsmotors 11 angeordnet. Das zweite Lager 19 ist zwischen dem Antriebsmotor 11 und dem Antriebsritzel 13, und das dritte Lager 20 ist auf der dem ersten Lager 18 gegenüberliegenden Seite der Antriebswelle 12 angeordnet. Das erste Lager 18 und das zweite Lager 19 sind insbesondere konventionell aufgebaute Kugel- oder Gleitlager. Hierbei sind das erste Lager 18 und das zweite Lager 19 in Gehäuseabschnitten 22, 23 aufgenommen bzw. in diesen angeordnet. Ebenso ist das dritte Lager 20 in einem Gehäuseabschnitt 24 aufgenommen.

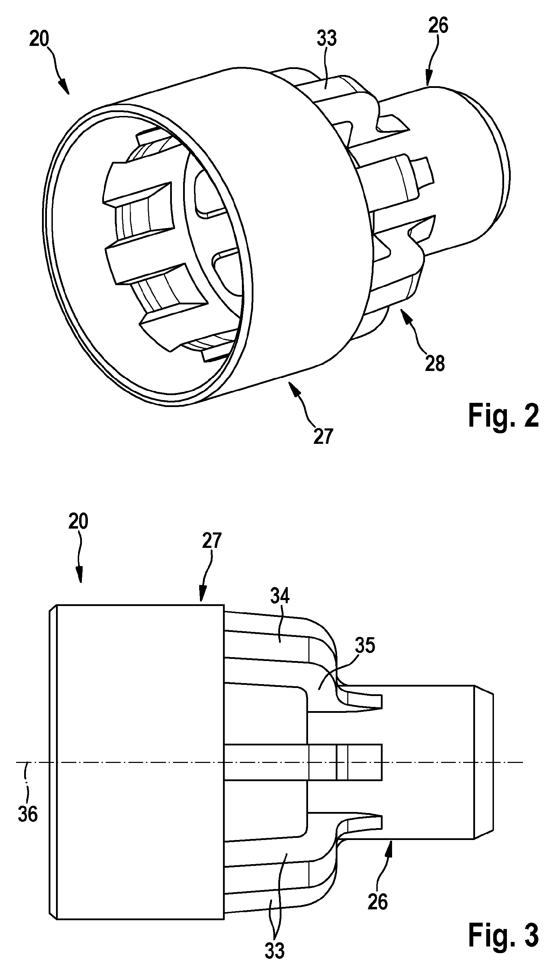

Erfindungsgemäß ist es vorgesehen, dass das dritte Lager 20 als einstückiges Bauteil ausgebildet ist. Insbesondere besteht das dritte Lager 20 aus Kunststoff und ist als Kunststoffspritzgussteil ausgebildet. Wie insbesondere aus einer Zusammenschau der Fig. 1 bis Fig. 4 erkennbar ist, weist das dritte Lager 20 drei Funktionsbereiche 26 bis 28 auf. Der erste Funktionsbereich 26 ist im Wesentlichen hülsenförmig ausgebildet und weist eine Öffnung 29 auf, durch die das eine Ende 30 der Antriebswelle 12 in den ersten Funktionsbereich 26 eingeschoben werden kann. Hierzu weist der erste Funktionsbereich 26 eine Durchgangsbohrung 31 auf, die eine beispielsweise glatte Innenwand hat. Bevorzugt ist es vorgesehen, dass der Durchmesser der Durchgangsbohrung 31 derart bemessen ist, dass das Ende 30 der Antriebswelle 12 in der Durchgangsbohrung 31 mit geringem Radialspiel aufgenommen ist.

Der zweite Funktionsbereich 27 dient der Lagerung des dritten Lagers 20 in dem Gehäuseabschnitt 24. Auch der zweite Funktionsbereich 27 ist im Wesentlichen hülsenförmig ausgebildet und weist einen Außendurchmesser auf, der der Aufnahme im Gehäuseabschnitt 24 angepasst ist, so dass der zweite Funktionsbereich 27 insbesondere form- bzw. kraftschlüssig im Gehäuseabschnitt 24 aufgenommen ist.

Der dritte Funktionsbereich 28 verbindet den ersten Funktionsbereich 26 mit dem zweiten Funktionsbereich 27. Der dritte Funktionsbereich 28 weist mehrere, vorzugsweise in gleichmäßigen Winkelabständen zueinander angeordnete Verbindungsstege 33 auf, die im Ausführungsbeispiel L-förmig ausgebildet sind. Hierbei ist der längere Schenkel 34 mit der einen Stirnseite des zweiten Funktionsbereiches 27 verbunden, während der andere, kürzere Schenkel 35 den ersten Funktionsbereich 26 an dessen Außenumfang umfasst. Wesentlich ist, dass mittels des dritten Funktionsbereiches 28 eine Relativbewegung zwischen dem ersten Funktionsbereich 26 und dem zweiten Funktionsbereich 27, insbesondere in radialer Richtung, bezogen auf die Längsachse 36 des Lagers 20, ermöglicht wird. Hierbei kann die elastische Anordnung zwischen den beiden Funktionsbereichen 26, 27 durch die Anzahl der Verbindungsstege 33, deren Querschnitt sowie deren sonstige geometrische Gestaltung den jeweiligen Anforderungen angepasst werden.

Bei dem in den Fig. 1 bis 4 dargestellten dritten Lager 20 sind die drei Funktionsbereiche 26 bis 28 in Bezug auf die Längsachse 36 des dritten Lagers 20, die mit der Längsachse der Antriebswelle 12 in montiertem Zustand des dritten Lagers 20 zusammenfällt, in axialer Richtung im Wesentlichen hintereinander angeordnet.

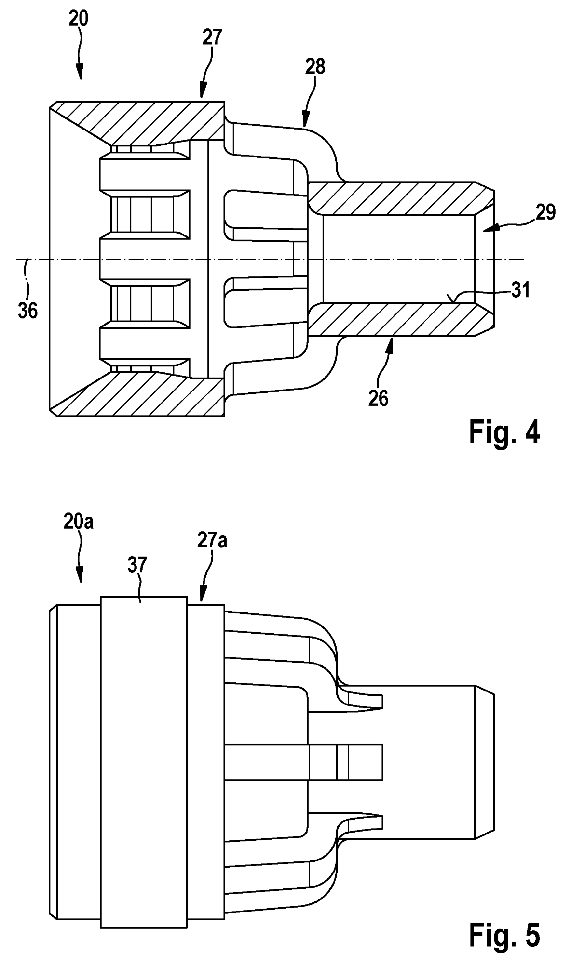

In der Fig. 5 ist ein modifiziertes drittes Lager 20a dargestellt, das Lager 20a weist im Bereich des zweiten Funktionsbereiches 27a ein Dämpfungselement 37 in Form einer Gummimanschette auf. Hierbei ist das Dämpfungselement 37 mit einer gewissen Spannung um den Außenumfang des zweiten Funktionsbereiches 27a gelegt, damit das Dämpfungselement 37 bei der Montage des dritten Lagers 20a nicht verrutscht. Das Dämpfungselement 37 bewirkt insbesondere eine zusätzliche Entkupplung von über die Antriebswelle 12 in das Gehäuse bzw. die Antriebseinheit 1 eingeleiteten Schwingungen, die ansonsten zu Geräuschen führen könnten.

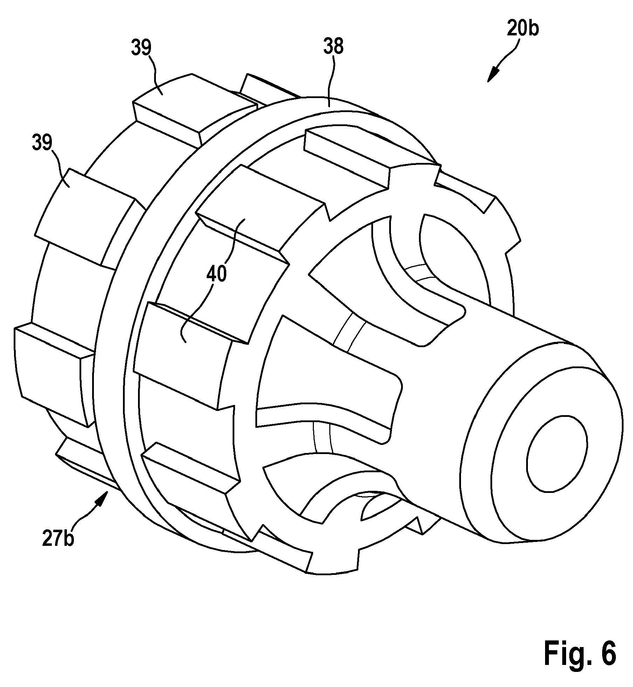

In der Fig. 6 ist bei einem dritten Lager 20b ein Dämpfungselement dargestellt, das als O-Ring 38 ausgebildet ist. Hierbei ist der O-Ring 38 vorzugweise durch Formschluss im Bereich des zweiten Funktionsbereiches 27b gehalten. In dem in der Fig. 6 dargestellten Ausführungsbeispiel dienen hierzu axial voneinander beabstandete Halterippen 39, 40, die am Außenumfang des zweiten Funktionsbereiches 27b ausgebildet sind. Wesentlich hierbei ist, dass die Halterippen 39, 40 bei montiertem O-Ring 38 diesen radial nicht überragen.

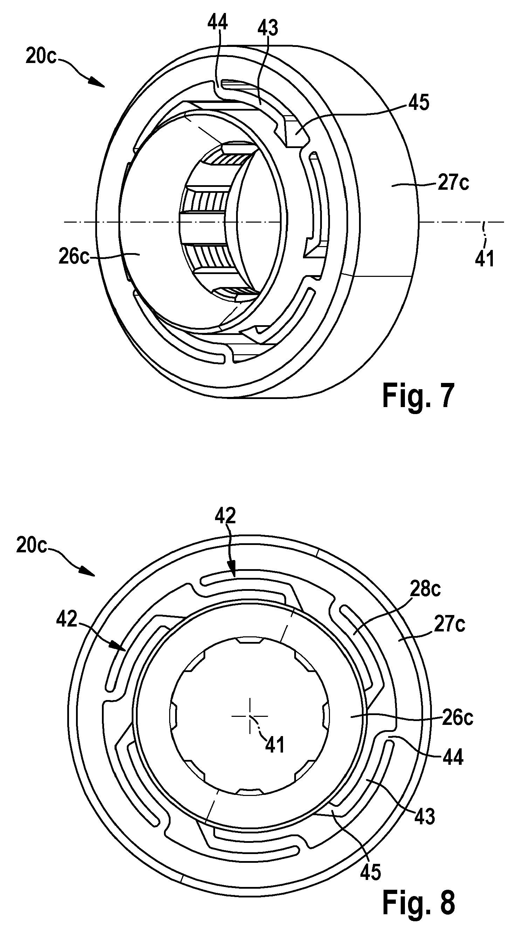

In den Fig. 7 und 8 ist ein nochmals modifiziertes drittes Lager 20c dargestellt. Das Lager 20c unterscheidet sich von den Lagern 20, 20a und 20b dadurch, dass dessen Funktionsbereiche 26c, 27c, 28c in Bezug auf eine Längsachse 41 des dritten Lagers 20c im Wesentlichen radial bzw. konzentrisch, das heißt auf geringer axialer Längserstreckung zueinander angeordnet sind, wobei der erste Funktionsbereich 26c den geringsten Durchmesser aufweist, während der zweite Funktionsbereich 27c den größten Durchmesser aufweist. Der dritte Funktionsbereich 28c weist wiederum Verbindungsstege 42 auf, die dem ersten Funktionsbereich 26c mit dem zweiten Funktionsbereich 27c verbinden. Die Verbindungsstege 42 weisen hierbei einen relativ langen Abschnitt 43 auf, der auf einem Teildurchmesser des dritten Funktionsbereichs 28c tangential zur Ankerwelle 12 angeordnet ist. Von dem Abschnitt 43 ragen kurze Füße 44, 45 in Richtung des ersten Funktionsbereiches 26c bzw. des zweiten Funktionsbereiches 27c. Die Füße 44, 45 weisen im Wesentlichen eine radiale Komponente zur Antriebswelle 12 auf. Näherungsweise bilden die Verbindungsstege 42 spiralförmige federnde Stege, die eine radiale Relativbewegung zwischen dem ersten und dem zweiten Funktionsbereich (26, 27) erlauben.

Die soweit beschriebene Lagereinrichtung 10 bzw. deren drittes Lager 20, 20a, 20b, 20c, können in vielfältiger Art und Weise abgewandelt bzw. modifiziert werden, ohne vom Erfindungsgedanken abzuweichen. Dieser besteht in der Verwendung eines als einstückiges Bauteil ausgebildeten dritten Lagers 20, 20a, 20b, 20c, das den Endbereich der Antriebswelle 12 aufnimmt und eine radiale Beweglichkeit der Antriebswelle 12 im Bereich der Aufnahme ermöglicht.

## Patentansprüche

1. Antriebseinheit (1), mit einem ortsfesten Element, insbesondere einem Gehäuseelement, mit einem Antriebsmotor (11), mit einem Getriebeelement (15), mit einer mehrfach gelagerten Antriebswelle (12) und mit einer Lagereinrichtung (10) für den Antriebsmotor (11), der über die mehrfach gelagerte Antriebswelle (12) mit dem Getriebeelement (15) zusammenwirkt, mit einem ersten Lager (18), das auf der dem Getriebeelement (15) gegenüberliegenden Seite des Antriebsmotors (11) angeordnet ist, einem zweiten Lager (19), das zwischen dem Antriebsmotor (11) und dem Getriebeelement (15) angeordnet ist und einem dritten Lager (20; 20a; 20b; 20c), das auf der dem Antriebsmotor (11) abgewandten Seite des Getriebeelements (15) angeordnet ist, wobei das dritte Lager (20; 20a; 20b; 20c) in einer Richtung senkrecht zur Längsachse der Antriebswelle (12) beweglich angeordnet ist, wobei das dritte Lager (20; 20a; 20b; 20c) als einstückiges Bauelement ausgebildet ist, das einerseits die Antriebswelle (12) an ihrem Endbereich (30) aufnimmt, und andererseits in einer Aufnahme (24) des ortsfesten Elements, insbesondere des Gehäuseelements, aufgenommen ist, und wobei das dritte Lager (20; 20a; 20b; 20c) als Kunststoffspritzgußteil ausgebildet ist,
**dadurch gekennzeichnet,**
**dass** das dritte Lager (20; 20a; 20b; 20c) drei unterschiedliche Funktionsbereiche (26; 26c, 27; 27a; 27b; 27c, 28; 28c) aufweist, einen ersten Funktionsbereich (26; 26c) zur Aufnahme der Antriebswelle (12) in ihrem Endbereich (30), einen zweiten Funktionsbereich (27; 27a; 27b; 27c) zur Aufnahme des dritten Lagers (20; 20a; 20b; 20c) in der Aufnahme (24) und einen dritten Funktionsbereich (28; 28c), der den ersten Funktionsbereich (26; 26c) mit dem zweiten Funktionsbereich (27; 27a; 27b; 27c) verbindet, wobei der dritte Funktionsbereich (28; 28c) elastisch ausgebildet ist und eine Relativbewegung zwischen dem ersten Funktionsbereich (26; 26c) und dem zweiten Funktionsbereich (28; 28c) erlaubt, wobei der erste Funktionsbereich (26; 26c) und der zweite Funktionsbereich (27; 27a; 27b; 27c) jeweils hülsenförmig ausgebildet ist, und wobei der Außendurchmesser des zweiten Funktionsbereichs (27; 27a; 27b; 27c) einen Durchmesser aufweist, der der Aufnahme (24) im Gehäuseelement angepasst ist, so dass der zweite Funktionsbereich (27; 27a;27b; 27c) form- bzw. kraftschlüssig in der Aufnahme (24) aufgenommen ist.

2. Antriebseinheit nach Anspruch 1,
**dadurch gekennzeichnet,**
**dass** das dritte Lager (20; 20a; 20b; 20c) die Antriebswelle (12) an ihrem Endbereich (30) aufnimmt.

3. Antriebseinheit nach Anspruch 1 oder 2,
**dadurch gekennzeichnet,**
**dass** die drei Funktionsbereiche (26, 27; 27a; 27b, 28) in Bezug auf eine Längsachse (36) des dritten Lagers (20; 20a; 20b) im Wesentlichen axial hintereinander angeordnet sind.

4. Antriebseinheit nach Anspruch 1 oder 2,
**dadurch gekennzeichnet,**
**dass** die drei Funktionsbereiche (26c, 27c, 28c) in Bezug auf eine Längsachse (41) des dritten Lagers (20c) im Wesentlichen radial bzw. konzentrisch zueinander angeordnet sind.

5. Antriebseinheit nach einem der Ansprüche 1 bis 4,
**dadurch gekennzeichnet,**
**dass** der dritte Funktionsbereich (28; 28c) elastische Verbindungsstege (33; 42) aufweist, die den ersten Funktionsbereich (26; 26c) mit dem zweiten Funktionsbereich (27; 27c) verbinden, wobei die Verbindungsstege (33, 42) insbesondere spiralförmig oder zumindest teilweise in Umfangsrichtung zur Antriebswelle (12) angeordnet sind.

6. Antriebseinheit nach einem der Ansprüche 1 bis 5,
**dadurch gekennzeichnet,**
**dass** der zweite Funktionsbereich (27a; 27b) von einem Dämpfungselement (37; 38) radial umfasst ist, das in der Aufnahme (24) anliegt.

7. Antriebseinheit nach Anspruch 6,
**dadurch gekennzeichnet,**
**dass** das Dämpfungselement als ein insbesondere aus Gummi bestehender O-Ring (38) ausgebildet ist und in einer radial umlaufenden Aufnahme des zweiten Funktionsbereichs (27b) formschlüssig aufgenommen ist

8. Verstellantrieb, insbesondere Fensterverstellantrieb, Wischerantrieb oder Sitzverstellantrieb in einem Kraftfahrzeug, mit einer Antriebseinheit (1) nach einem der Ansprüche 1 bis 7.

## Claims

1. Drive unit (1), having a stationary element, in particular a housing element, having a drive motor (11), having a transmission element (15), having a drive shaft (12) which is mounted in multiple locations, and having a bearing device (10) for the drive motor (11) which interacts with the transmission element (15) via the drive shaft (12) which is mounted in multiple locations, having a first bearing (18) which is arranged on that side of the drive motor (11) which lies opposite the transmission element (15), a second bearing (19) which is arranged between the drive motor (11) and the transmission element (15), and a third bearing (20; 20a; 20b; 20c) which is arranged on that side of the transmission element (15) which faces away from the drive motor (11), the third bearing (20; 20a; 20b; 20c) being arranged such that it can be moved in a direction perpendicularly with respect to the longitudinal axis of the drive shaft (12), the third bearing (20; 20a; 20b; 20c) being configured as a single-piece component which receives the drive shaft (12) on its end region 30 on one side, and is received on the other side in a receptacle (24) of the stationary element, in particular of the housing element, and the third bearing (20; 20a; 20b; 20c) being configured as a plastic injection-moulded part, **characterized in that** the third bearing (20; 20a; 20b; 20c) has three different functional regions (26; 26c, 27; 27a; 27b; 27c, 28; 28c), a first functional region (26; 26c) for receiving the drive shaft (12) in its end region (30), a second functional region (27; 27a; 27b; 27c) for receiving the third bearing (20; 20a; 20b; 20c) in the receptacle (24), and a third functional region (28; 28c) which connects the first functional region (26; 26c) to the second functional region (27; 27a; 27b; 27c), the third functional region (28; 28c) being of elastic configuration and permitting a relative movement between the first functional region (26; 26c) and the second functional region (28; 28c), the first functional region (26; 26c) and the second functional region (27; 27a; 27b; 27c) being in each case of sleeve-shaped configuration, and the external diameter of the second functional region (27; 27a; 27b; 27c) having a diameter which is adapted to the receptacle (24) in the housing element, with the result that the second functional region (27; 27a; 27b; 27c) is received in the receptacle (24) in a positively locking or non-positively locking manner.

2. Drive unit according to Claim 1, **characterized in that** the third bearing (20; 20a; 20b; 20c) receives the drive shaft (12) on its end region (30).

3. Drive unit according to Claim 1 or 2, **characterized in that** the three functional regions (26, 27; 27a; 27b, 28) are arranged substantially axially behind one another in relation to a longitudinal axis (36) of the third bearing (20; 20a; 20b).

4. Drive unit according to Claim 1 or 2, **characterized in that** the three functional regions (26c, 27c, 28c) are arranged substantially radially or concentrically with respect to one another in relation to a longitudinal axis (41) of the third bearing (20c).

5. Drive unit according to one of Claims 1 to 4, **characterized in that** the third functional region (28; 28c) has elastic connecting webs (33; 42) which connect the first functional region (26; 26c) to the second functional region (27; 27c), the connecting webs (33, 42) being arranged, in particular, helically or at least partially in the circumferential direction with respect to the drive shaft (12).

6. Drive unit according to one of Claims 1 to 5, **characterized in that** the second functional region (27a; 27b) is enclosed radially by a damping element (37; 38) which fits in the receptacle (24).

7. Drive unit according to Claim 6, **characterized in that** the damping element is configured as an O-ring (38) which consists, in particular, of rubber, and is received in a positively locking manner in a radially circumferential receptacle of the second functional region (27b).

8. Adjusting drive, in particular window adjusting drive, wiper drive or seat adjusting drive in a motor vehicle, having a drive unit (1) according to one of Claims 1 to 7.

## Revendications

1. Unité d'entraînement (1), comprenant un élément fixe, en particulier un élément de boîtier, un moteur d'entraînement (11), un élément de transmission (15), un arbre d'entraînement (12) supporté sur plusieurs paliers et un dispositif de paliers (10) pour le moteur d'entraînement (11) qui coopère avec l'élément de transmission (15) par le biais de l'arbre d'entraînement (12) supporté sur plusieurs paliers, comprenant un premier palier (18) qui est disposé sur le côté du moteur d'entraînement (11) opposé à l'élément de transmission (15), un deuxième palier (19) qui est disposé entre le moteur d'entraînement (11) et l'élément de transmission (15) et un troisième palier (20 ; 20a ; 20b ; 20c), qui est disposé sur le côté de l'élément de transmission (15) opposé au moteur d'entraînement (11), le troisième palier (20 ; 20a ; 20b ; 20c) étant disposé de manière déplaçable dans une direction perpendiculaire à l'axe longitudinal de l'arbre d'entraînement (12), le troisième palier (20 ; 20a ; 20b ; 20c) étant réalisé sous forme de composant d'une seule pièce qui reçoit d'une part l'arbre d'entraînement (12) au niveau de sa région d'extrémité (30) et qui est reçu d'autre part dans un logement (24) de l'élément fixe, en particulier de l'élément de boîtier, et le troisième palier (20 ; 20a ; 20b ; 20c) étant réalisé sous forme de pièce moulée par injection de plastique,
**caractérisée en ce que**
le troisième palier (20 ; 20a ; 20b ; 20c) présente trois régions fonctionnelles différentes (26 ; 26c, 27 ; 27a ; 27b ; 27c, 28 ; 28c), une première région fonctionnelle (26 ; 26c) pour recevoir l'arbre d'entraînement (12) dans sa région d'extrémité (30), une deuxième région fonctionnelle (27 ; 27a ; 27b ; 27c) pour recevoir le troisième palier (20 ; 20a ; 20b ; 20c) dans le logement (24) et une troisième région fonctionnelle (28 .; 28c) qui relie la première région fonctionnelle (26 ; 26c) à la deuxième région fonctionnelle (27 ; 27a ; 27b ; 27c), la troisième région fonctionnelle (28 ; 28c) étant réalisée sous forme élastique et permettant un mouvement relatif entre la première région fonctionnelle (26 ; 26c) et la deuxième région fonctionnelle (28 ; 28c), la première région fonctionnelle (26 ; 26c) et la deuxième région fonctionnelle (27 ; 27a ; 27b ; 27c) étant réalisées à chaque fois en forme de douille et le diamètre extérieur de la deuxième région fonctionnelle (27 ; 27a ; 27b ; 27c) présentant un diamètre qui est adapté au logement (24) dans l'élément de boîtier, de telle sorte que la deuxième région fonctionnelle (27 ; 27a ; 27b ; 27c) soit reçue par engagement par correspondance de formes ou par force dans le logement (24).

2. Unité d'entraînement selon la revendication 1,
**caractérisée en ce que**
le troisième palier (20 ; 20a ; 20b ; 20c) reçoit l'arbre d'entraînement (12) au niveau de sa région d'extrémité (30).

3. Unité d'entraînement selon la revendication 1 ou 2,
**caractérisée en ce que**
les trois régions fonctionnelles (26, 27 ; 27a ; 27b ; 28) sont disposées essentiellement axialement les unes derrière les autres par rapport à un axe longitudinal (36) du troisième palier (20 ; 20a ; 20b).

4. Unité d'entraînement selon la revendication 1 ou 2,
**caractérisée en ce que**
les trois régions fonctionnelles (26c, 27c, 28c) sont disposées essentiellement radialement ou concentriquement les unes par rapport aux autres par rapport à un axe longitudinal (41) du troisième palier (20c).

5. Unité d'entraînement selon l'une quelconque des revendications 1 à 4,
**caractérisée en ce que**
la troisième région fonctionnelle (28 ; 28c) présente des nervures de connexion élastiques (33 ; 42) qui relient la première région fonctionnelle (26 ; 26c) à la deuxième région fonctionnelle (27 ; 27c), les nervures de connexion (33, 42) étant disposées notamment en forme de spirale au moins en partie dans la direction périphérique par rapport à l'arbre d'entraînement (12).

6. Unité d'entraînement selon l'une quelconque des revendications 1 à 5,
**caractérisée en ce que**
la deuxième région fonctionnelle (27a ; 27b) est entourée radialement par un élément d'amortissement (37 ; 38) qui s'applique dans le logement (24).

7. Unité d'entraînement selon la revendication 6,
**caractérisée en ce que**
l'élément d'amortissement est réalisé sous la forme d'une d'un joint torique (38) constitué notamment de caoutchouc et est reçu par engagement par correspondance de formes dans un logement radialement périphérique de la deuxième région fonctionnelle (27b).

8. Entraînement de réglage, en particulier entraînement de réglage de fenêtre, entraînement d'essuie-glace ou entraînement de réglage de siège dans un véhicule automobile, comprenant une unité d'entraînement (1) selon l'une quelconque des revendications 1 à 7.
